# EUROPÄISCHE PATENTANMELDUNG

(11) **EP 0 970 777 A2**
(43) Veröffentlichungstag der Anmeldung: **12.01.2000**
(21) Anmeldenummer: 99107716.5
(22) Anmeldetag: 17.04.1999
(51) Int. Cl.: B23Q 3/10

(54) **System zum Aufbau von Vorrichtungen zum Aufspannen von Werkstücken**

(30) Priorität: 10.07.1998 DE 29812280 U
(71) Anmelder: Horst Witte Entwicklungs- und Vertriebs-KG, 21369 Nahrendorf (DE)
(72) Erfinder: Witte,Horst, 21369 Nahrendorf (DE); Witte, Andreas, 21354 Bleckede (DE)
(74) Vertreter: von Raffay, Vincenz, Dipl.-Ing.

(57) **Zusammenfassung**

Das System dient dem Aufbau von Vorrichtungen aus Aufnahmerohren, gegebenenfalls einer Grundplatte sowie einer Adapterplatte. Die Verbindung der einzelnen Vorrichtungsbauteile erfolgt mit Hilfe von Verbindungselementen, die als Hohlkugel ausgebildet sind. Die Aufnahmerohre weisen in Längsrichtung am Umfang gleichmäßig verteilte Fasen (3) - vorzugsweise an den Kanten quaderförmiger oder quadratischer Aufnahmerohre - auf, auf denen Rasterpunkte in Form von konkaven Kugelkalotten (2) ausgebildet sind. Diese in definierter und reproduzierbarer Lage und in regelmäßigen Koordinatenabständen liegende Rasterpunkte haben Mittelpunkte (5), die auf parallel zu den Fasen (3) außerhalb des Rohrkörpers verlaufenden Linien liegen, die die ideale Rohrform beschreiben. Wenn die Aufnahmerohre Quader sind, dann sind diese Linien die Schnittlinien der bei der entsprechenden Idealform aneinander angrenzenden Flächen des Quaders. Hierdurch ist eine Bearbeitung des Aufnahmerohres nur hinsichtlich der konkaven Kugelkalotten (2) erforderlich. Diese beschreiben mit ihren Mittelpunkten die ideale Rohrform, selbst wenn die tatsächliche Rohrform von dieser Idealform abweicht. Entsprechend aufgebaut sind eine Grundplatte und eine Adapterplatte. Die Hohlkugeln (11), die die Verbindungselemente bilden, haben einen Außendurchmesser, der demjenigen der konkaven Kugelkalotten (2) entspricht. Die Kugelkalotten nehmen in ihrem Hohlraum Befestigungsschrauben zur Verbindung der einzelnen Vorrichtungsbauteile auf. Mit vorzugsweise vier Hohlkugeln lassen sich die Vorrichtungsbauteile exakt, reproduzierbar und ohne besondere Justierung miteinander verbinden.

## Beschreibung

Die Erfindung betrifft ein System zum Aufbau von Vorrichtungen zum Aufspannen von Werkstücken in definierter und reproduzierter Lager auf Werkzeug- und Meßmaschinen. Weiterhin betrifft die Erfindung ein Aufnahmerohr für ein derartiges System mit in regelmäßigen Koordinatenabständen ausgebildeten Rasterpunkten sowie eine entsprechende Grundplatte. Auch betrifft die Erfindung ein Verbindungselement und einen Verbindungsadapter zur Verbindung derartiger Aufnahmerohre untereinander, einer Grundplatte oder einer Adapterplatte. Aus der EP 0 222 147 B1 ist ein derartiges System bekannt.

Die Aufnahmerohre und die Grundplatte dieses bekannten Systems weisen in regelmäßigen Koordinatenabständen angeordnete Paßbohrungen auf. Diese Paßbohrungen bilden Rasterpunkte durch die ein Rastermaß vorgegeben ist. Dieses Rastermaß ist in allen drei Ebenen (x, y und z) vorhanden.

Die die Rasterpunkte bildenden Paß- oder Querbohrungen bei dem bekannten System sind in den Aufnahmerohren, bei denen es sich vorzugsweise um Quader mit rechteckigen oder quadratischem Querschnitt handelt, sich kreuzend in den vier Flächen in einer großen Zahl und mit großer Präzision ausgebildet, um mit Hilfe dieser Aufnahmeteile und ggf. entsprechender Grundplatten die unterschiedlichsten räumlichen Gebilde zum Aufspannen und Vermessen von Werkstücken aufzubauen. Die Aufnahmerohre werden aus hochfesten und stranggepreßten Aluminiumrohren hergestellt, die anschließend zur Erzielung der erforderlichen Präzision mechanisch bearbeitet werden. Durch die Vielzahl der Paß- und Querbohrungen werden die Widerstandsmomente verringert.

Rohre aus weniger hochfestem Aluminium lassen sich präziser ziehen, wobei aber eine Präzision, wie sie durch mechanische Bearbeitung möglich ist, nicht erreicht wird.

Der Erfindung liegt nun die Aufgabe zugrunde, ein System der eingangs genannten Art und Aufnahmerohre, Grundplatte und Verbindungselemente für ein solches System zu schaffen, das bei gleicher Präzision preiswerter hergestellt werden kann, sowie nach wie vor einen universellen Einsatz auch in Verbindung mit dem bekannten System nach der EP 0 222 1247 B1 erlaubt. Insbesondere ist es Aufgabe der Erfindung, ein Aufnahmerohr zu schaffen, das sowohl mit bekannten Systemen kombinierbar ist, als auch ein wesentliches Bauteil für ein neues, preiswerteres System bildet.

Diese Aufgabe wird grundsätzlich für ein Aufnahmerohr durch das Kennzeichen des Anspruches 1 gelöst, wobei eine besonders vorteilhafte Ausführungsform diejenige nach Anspruch 2 ist. Rohre mit quadratischem oder rechteckigem Querschnitt sind die häufigste Anwendungsform, obwohl auch kreisrunde und mehreckige Rohre verwendet werden können, an denen die Fasen und die konkaven Kugelkalotten ausgebildet werden.

Das Aufnahmerohr nach der Erfindung wird durch Strangpressen mit den Fasen an den vier Kanten des Quaders hergestellt. Es reicht aus, dieses Rohr aus einer solchen Aluminiumlegierung strangzupressen, an die nicht höchste Anforderungen hinsichtlich der Festigkeit gestellt werden müssen, um für eine entsprechend hohe Genauigkeit zu sorgen. Die mechanische Bearbeitung beschränkt sich auf das Einbringen der konkaven Kugelkalotten, die die Präzision in allen drei Ebenen gewährleisten. Der Querschnitt des Aufnahmerohres mit den Fasen und die Tatsache, daß grundsätzlich nur so viele Befestigungsbohrungen gebohrt werden, wie erforderlich sind, erlauben eine Herstellung aus nicht so hochfester Aluminiumlegierung. Wenn die tatsächliche Form des Rohres von der Idealform, beispielsweise durch leichtes Verdrehen, abweicht, so liegen die Mittelpunkte immer auf der Idealform, so daß bei Verwendung der entsprechenden konkaven Kugelkalotten als Rasterpunkte das Rastermaß der Idealform entspricht. Die beim Herstellen, insbesondere beim Strangpressen des Rohres, vorkommenden Ungenauigkeiten, sind daher beim Aufbau eines entsprechenden Systems unerheblich. In anderen Worten, die Mittelpunkte der konkaven Kugelkalotten liegen nicht auf den Schnittpunkten der aneinander angrenzenden Seitenflächen des tatsächlichen Rohres, sondern der Idealform des Rohres. Entsprechend unterschiedlich groß kann die Fläche der Kugelkalotten tatsächlich in der Fase sein. Wichtig ist, daß ihre Mittelpunkte alle auf der Ideallinie liegen.

Wenn nun ein solches Aufnahmerohr zum Aufbau eines Systems verwendet werden soll, so werden entweder in den Kugelkalotten, d.h. in den Achsen, die durch den Mittelpunkt gehen, oder in den Seitenflächen der Aufnahmerohre Befestigungsbohrungen mit Hilfe von Bohrvorrichtungen gebohrt. Diese Bohrvorrichtungen weisen in dem Rastermaß angeordnete konvexe Kugelkalotten auf, die sich in den konkaven Kugelkalotten der Rohre abstützen. Hierdurch wird wiederum sichergestellt, daß die Befestigungsbohrungen unter Berücksichtigung der Idealform des Aufnahmerohres gebohrt werden. Abweichungen von der Idealform werden beim Bohren der Befestigungsbohrungen kompensiert, so daß die Befestigung selbst immer sehr präzise unter Berücksichtigung der Idealform erfolgt.

In vorteilhafter Weise ist das Aufnahmerohr so gestaltet, wie in Anspruch 3 angegeben. Die innenliegenden Schrägflächen sorgen für eine zusätzliche Versteifung.

Die Grundplatte nach Anspruch 4 weist in dem vorgegebenen Rastermaß entsprechende konkave Kugelkalotten auf, um eine Verbindung in diesem Rastermaß mit entsprechenden Aufnahmerohren zu ermöglichen.

Die Adapterplatte nach Anspruch 5 ist so dimensioniert und mit einer Fase und entsprechenden konkaven Kugelkalotten versehen, daß sie mit den Aufnahmerohren verbunden werden kann, um entsprechende Vorrichtungsbauteile zu befestigen. Die Adapterplatte kann auch zum Aufbau einer Bohrvorrichtung verwendet werden.

Die Bohrvorrichtung, ob nun ausgehend von der Adapterplatte oder mit konvexen Kugelkalotten, kann auch zum Bohren der Grundplatte verwendet werden.

Grundsätzlich werden nur die Befestigungsbohrungen in dem Aufnahmerohr und in der Grundplatte gebohrt, die zum Aufbau eines bestimmten Systems erforderlich sind. Hierdurch wird die Anzahl der Bohrungen, die auch eine Schwächung bedeuten, erheblich vermindert, wodurch auch ein Preisvorteil erzielt wird. Wenn die Teile später zum Aufbau eines anderen Systems eingesetzt werden sollen, können entsprechend weitere Befestigungsbohrungen gebohrt werden.

In den Ansprüchen 6 bis 8 ist ein besonderes Verbindungselement beschrieben, um die Verbindung der Teile nach den Ansprüche 1 bis 5 herzustellen.

Dieses Verbindungselement ist so aufgebaut, wie in Anspruch 6 angegeben. Zur Verbindung zweier Teile zum Aufbau einer Vorrichtung wird zuerst eine Befestigungsschraube durch die Durchsteckbohrung in den Hohlraum der Hohlkugel eingeführt und durch eine der Befestigungsbohrungen durchgesteckt und das Gewinde in der Befestigungsbohrung der ausgewählten konkaven Kugelkalotte eingeschraubt. Die Schraubverbindung wird aber noch nicht festgezogen. Dann wird die zweite Befestigungsschraube eingeführt und durch die freie zweite Befestigungsbohrung durchgesteckt und in die Gewindebohrung des zu verbindenden Teils geschraubt. Anschließend wird dieser Vorgang für weitere, vorzugsweise drei Verbindungselemente in Form von Hohlkugeln wiederholt. Wenn die Verbindung soweit hergestellt ist, werden die Schrauben fest gezogen. Die zu verbindenden Teile nehmen hierbei zwangsläufig die exakte gewünschte Lage zueinander ein, da der Außendurchmesser der Hohlkugel demjenigen der konkaven Kugelkalotte entspricht. Die Durchsteckbohrung und die Werkzeugbohrung dienen hierbei zum Einführen von Werkzeugen, beispielsweise Innensechskantschlüsseln.

Die Winkel, unter denen die Bohrungen, insbesondere die Befestigungsbohrungen, untereinander angeordnet sind, hängen davon ab, welche Teile wie miteinander verbunden werden sollen. Wenn zwei Aufnahmerohre parallel zueinander verbunden werden sollen, beträgt der Winkel zwischen den Befestigungsbohrungen 90°. Wenn zwei Aufnahmerohre rechtwinklig zueinander verbunden werden sollen, beträgt der Winkel zwischen den Befestigungsbohrungen 120°. Wird eine Verbindung zwischen einem Aufnahmerohr und einer Grundplatte erstellt, so wird ein Verbindungselement in Form einer Hohlkugel ausgewählt, bei dem der Winkel zwischen den Befestigungsbohrungen 135° beträgt.

Es ist auch möglich, mehr als zwei Befestigungsbohrungen vorzusehen (Anspruch 7).

Wenn das Verbindungselement so ausgebildet ist, wie in Anspruch 8 angegeben, dann ist es möglich, eine Befestigungsschraube in die Befestigungsbohrung mit Gewinde im voraus einzuschrauben, wobei die Befestigungsschraube zwischen Gewinde und Kopf eine Freidrehung aufweist, so daß sie lose und beweglich in der Gewindebohrung sitzt, aber nicht herausfallen kann. Hierdurch nimmt die Befestigungsschraube bereits eine Position ein, die die erste Verbindung mit einem entsprechenden Bauteil der Vorrichtung erleichtert.

Zum Verbinden von zwei Bauteilen zum Aufbau einer Vorrichtung sind normalerweise vier Verbindungselemente in Form einer entsprechend gestalteten Hohlkugel erforderlich.

Anspruch 9 ist darauf gerichtet, daß aus verschiedenen Teilen nach den Ansprüchen 1 bis 8 unterschiedliche Systeme aufgebaut werden können.

Im folgenden wird die Erfindung unter Hinweis auf die Zeichnung anhand verschiedener Ausführungsbeispiele näher erläutert.

Es zeigt:
- Fig. 1:: eine perspektivische Ansicht einer Ausführungsform eines Aufnahmerohres nach der Erfindung;
- Fig. 2:: einen Schnitt durch die Ausführungsform des Aufnahmerohres nach Fig. 1 mit einer aufgesetzten Bohrvorrichtung zum Bohren von Befestigungsbohrungen;
- Fig. 3:: eine perspektivische Ansicht einer Ausführungsform einer Grundplatte nach der Erfindung;
- Fig. 4:: eine geschnittene perspektivische Ansicht der Verbindung eines Aufnahmerohres nach Fig. 1 mit einer Adapterplatte, die grundsätzlich nach dem Prinzip des Aufnahmerohres gestaltet ist, wobei Verbindungselemente in Form einer Hohlkugel ebenfalls geschnitten dargestellt sind;
- Fig. 5:: eine der Fig. 4 entsprechende Ansicht, jedoch einer Verbindung zwischen zwei parallel zueinander verlaufenden Aufnahmerohren nach Fig. 1;
- Fig. 6:: eine perspektivische Ansicht einer Verbindung von zwei senkrecht zueinander verlaufenden Aufnahmerohren nach Fig. 1;
- Fig. 7:: eine geschnittene perspektivische Ansicht einer Verbindung einer Grundplatte nach Fig. 3 mit einem Aufnahmerohr nach Fig. 1;
- Fig. 8:: einen Schnitt durch eine Ausführungsform eines Verbindungselementes in Form einer Hohlkugel, insbesondere zur Verbindung von zwei parallel zueinander verlaufenden Aufnahmerohren;
- Fig. 9:: einen der Fig. 8 entsprechenden Schnitt jedoch einer Hohlkugel zur Verbindung von zwei Aufnahmerohren, die senkrecht zueinander verlaufen; und
- Fig. 10:: einen den Fig. 8 und 9 entsprechenden Schnitt jedoch einer Hohlkugel zur Verbindung einer Grundplatte mit einem Aufnahmerohr.

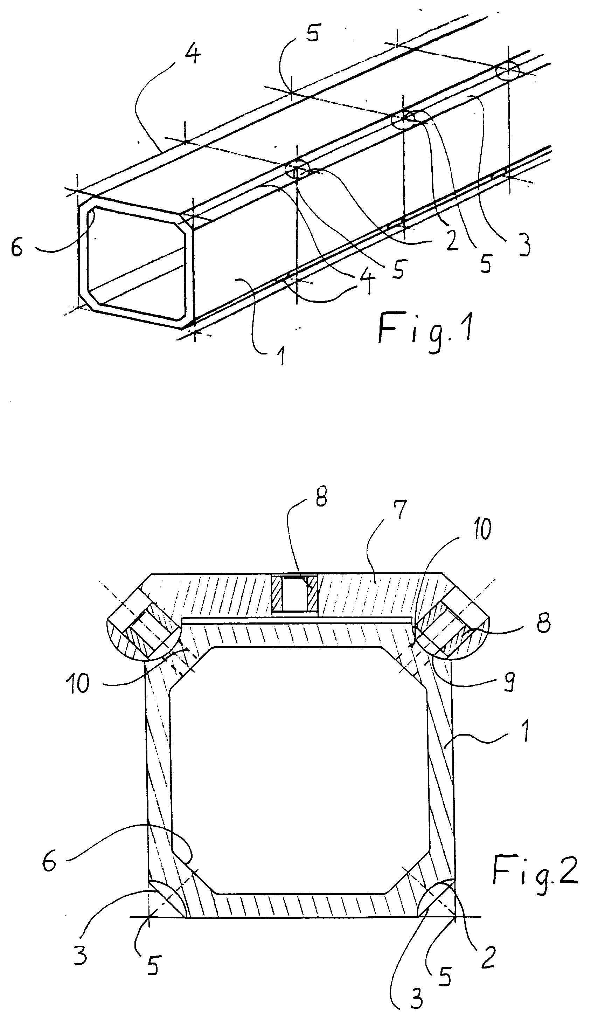

In Fig. 1 ist eine Ausführungsform eines Aufnahmerohres 1 nach der Erfindung dargestellt. Dieses Aufnahmerohr weist bei dieser Ausführungsform einen quadratischen Querschnitt auf. Es ist aus einer stranggepreßten Aluminiumlegierung hergestellt und nur die konkaven Kugelkalotten 2 werden durch mechanische Bearbeitung geschaffen. Die Kanten weisen bei 3 eine relativ große Fase auf. Die Innenkontur folgt dieser Kantenanfasung durch Schrägflächen 6 in den Ecken.

Die zum Aufbau eines Systems erforderlichen Rasterpunkte werden durch konkave Kugelkalotten 2 gebildet, die in einem regelmäßigen Raster in allen drei Ebenen (x, y und z) vorgesehen sind. Die Mittelpunkte 5 der Kugelkalotten 2 liegen nicht auf den tatsächlichen Schnittpunkten der Kanten des jeweiligen Rohres, sondern auf den Schnittpunkten der Kanten der Idealform 4. Wenn die Form des Rohres von der Idealform abweicht, was beim Strangpressen häufig nicht vermieden werden kann, dann liegen die Mittelpunkte 5 auf der Idealform 4, d.h. die Fläche der konkaven Kugelkalotten 2 ist je nach Lage des Mittelpunktes 5 unterschiedlich groß. Die Mittelpunkte 5 der Kugelkalotten beschreiben also bei der Ausführungsform nach Fig. 1 ein ideales exaktes Rohr mit quadratischem Querschnitt.

Selbstverständlich kann das Rohr auch einen rechteckigen oder einen anderen regelmäßigen Querschnitt aufweisen. Grundsätzlich ist auch die Kreisform möglich. Ein Vierkantrohr ist aber die geeignetste Form.

Das Aufnahmerohr nach Fig. 1 weist in regelmäßigen Koordinatenabständen am Umfang angeordnete konkave Kugelkalotten 2 auf, die auf Linien 4 liegen, die durch den Schnitt der Kanten des entsprechenden idealen Vierkantrohres gebildet werden.

Ein solches Aufnahmerohr eignet sich zum Aufbau eines Systems zum Aufbau von Vorrichtungen zum Aufspannen von Werkstücken in definierter und reproduzierter Lage. Entweder kann das Aufnahmerohr mit bekannten Systemen kombiniert werden, oder es dient mit anderen Aufnahmerohren und besonderen Verbindungselementen dem Aufbau eines entsprechenden Systems.

Um das Aufnahmerohr 1 mit den in regelmäßigen Koordinatenabständen angeordneten konkaven Kugelkalotten 2 in den Fasenflächen 3 zum Aufbau eines Systems zu vervollständigen, wird eine Bohrschablone 7 eingesetzt, wie sie in Fig. 2 dargestellt ist, um Befestigungsbohrungen 10 gegebenenfalls mit Gewinde herzustellen. Diese Bohrschablone 7 weist vier kugelförmige Füße mit konvexen Kugelkalotten 9 auf, die in dem durch die konkaven Kugelkalotten 2 vorgegebenen Rastermaß angeordnet sind. Die Achsen, auf denen die Mittelpunkte der Kugelkalotten 9 liegen, sind um 45° geneigt, wie es beim Betrachten der Fig. 2 deutlich wird. Diese Bohrvorrichtung 7 wird mit ihren Kugelkalotten 9 auf die konkaven Kugelkalotten 2 eines Aufnahmerohres nach Fig. 1 aufgesetzt und nimmt dann eine genau definierte Lage ein, die durch die Form des idealen Rohres bestimmt ist, da die Mittelpunkte der konkaven Kugelkalotten 2 auf den idealen Schnittlinien 4 des entsprechenden Aufnahmerohres 1 liegen.

In der Bohrvorrichtung befinden sich Bohrbuchsen 8, mit deren Hilfe Befestigungsbohrungen in dem Rohr gebohrt werden können. Diese sind in Fig. 1 noch nicht gezeigt. Sie können in einem Winkel von 45° durch die konkaven Kugelkalotten gebohrt werden, oder aber beispielsweise senkrecht durch eine Seitenfläche des Aufnahmerohres 1. Wenn das Aufnahmerohr 1 mit einem herkömmlichen System kombiniert werden soll, werden vorzugsweise die Befestigungsbohrungen in der Seitenwand gebohrt. Wenn das Aufnahmerohr 1 zum Aufbau eines Systems mit anderen derartigen Aufnahmerohren 1 verwendet werden soll, werden die Befestigungsbohrungen in den konkaven Kugelkalotten 2 gebohrt.

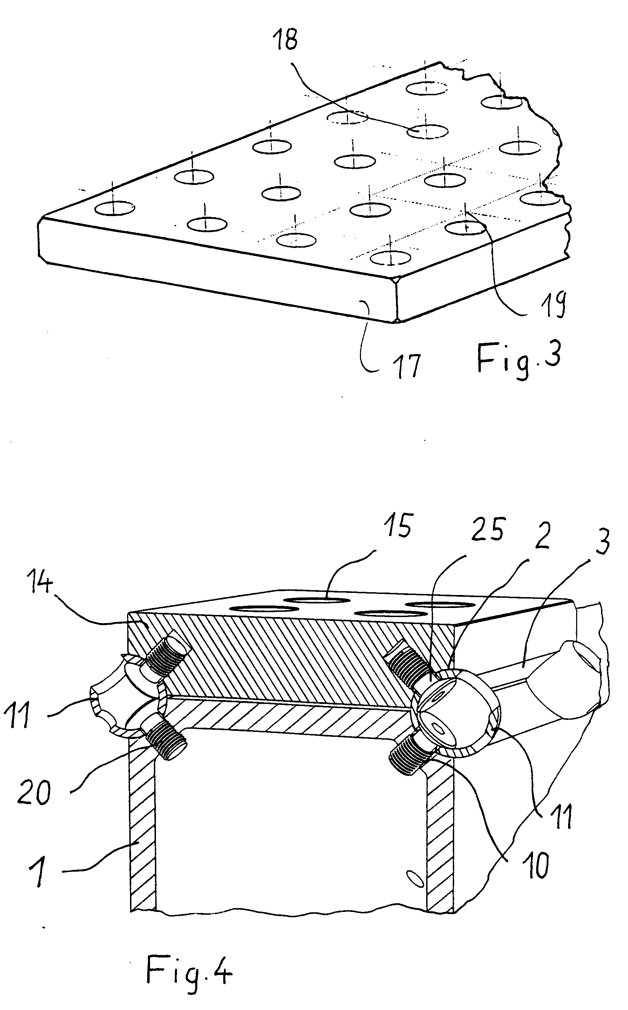

In Fig. 4 ist ein Aufnahmerohr 1 dargestellt, auf dem eine Adapterplatte 14 befestigt ist. Diese Adapterplatte 14 ist grundsätzlich so dimensioniert wie das Aufnahmerohr 1. Sie ist mit einer Fase 3 und mit konkaven Kugelkalotten 2 angeordnet in dem Rastermaß versehen. Die Adapterplatte 14 dient der Befestigung unterschiedlicher Vorrichtungsbauteile, die an dem System befestigt werden sollen, das aus Grundplatte und Aufnahmerohren aufgebaut ist. Zu diesem Zweck ist die Aufnahmeplatte 14 mit Befestigungsbohrungen 15 versehen.

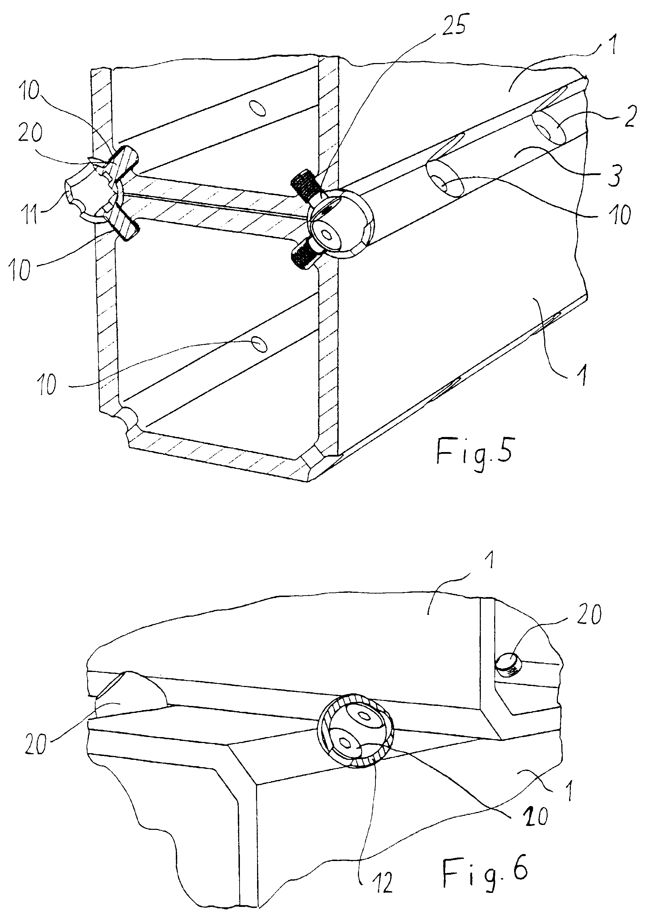

In Fig. 5 ist anstelle der Aufnahmeplatte ein weiteres Aufnahmerohr 1 an dem unten liegenden Aufnahmerohr 1 befestigt. Die beiden Aufnahmerohre verlaufen parallel zueinander.

Bei der Ausführungsform nach Fig. 6 verlaufen die zwei miteinander verbundenen Aufnahmerohr 1 senkrecht zueinander.

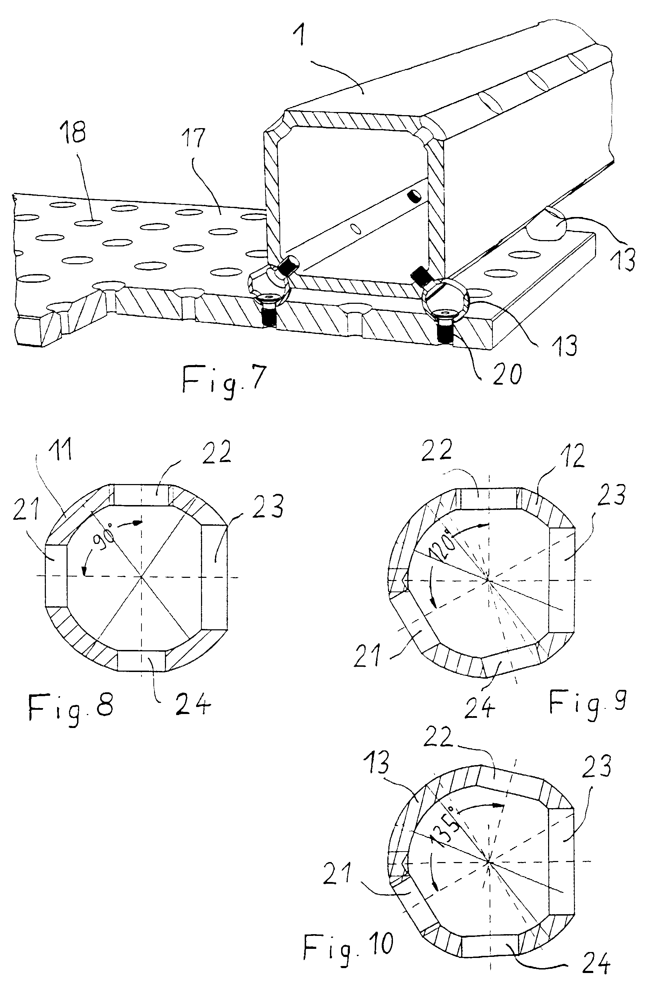

Bei der Ausführungsform nach Fig. 7 ist ein Aufnahmerohr 1 auf einer Grundplatte 17, wie sie in Fig. 3 dargestellt ist, befestigt.

Die Verbindung der einzelnen Bauteile erfolgt mit Hilfe von Verbindungselementen in Form von Hohlkugeln. Wenn die Fasen 3 der zu verbindenden Bauteile parallel zueinander verlaufen, wie bei den Ausführungsformen nach Fig. 4 und 5, dann kommt eine Hohlkugel 11 zum Einsatz, die im Schnitt auch in Fig. 8 dargestellt ist.

Wenn zwei quer oder senkrecht zueinander verlaufende Aufnahmerohre 1, wie in Fig. 6 dargestellt, miteinander verbunden werden sollen, erfolgt die Verbindung mit Hilfe von Verbindungselementen in Form von Hohlkugeln 12, wie sie im Schnitt auch in Fig. 9 dargestellt sind.

Im Falle der Verbindung einer Grundplatte mit einem Aufnahmerohr kommen Verbindungselemente in Form von Hohlkugeln 13 zum Einsatz, wie sie auch im Schnitt in Fig. 10 dargestellt sind.

Zur Verbindung von zwei Vorrichtungsbauteilen kommen jeweils vorzugsweise vier Hohlkugeln zum Einsatz, die gleich aufgebaut sind. Lediglich die Befestigungsbohrungen nehmen unterschiedliche Winkel zueinander ein.

Jede Hohlkugel hat einen Außendurchmesser, der gleich dem Durchmesser der konkaven Kugelkalotte 2 ist, so daß die Kugel flächig in der entsprechenden Kugelkalotte anliegt. Jede Hohlkugel 11, 12, 13 ist mit einer Durchsteckbohrung 23 versehen, deren Durchmesser so groß ist, daß eine Befestigungsschraube 20 mit Kopf in den Innenraum eingeführt werden kann. Es sind mindestens zwei Befestigungsbohrungen 21 und 22 vorgesehen. Weiterhin ist eine Werkzeugbohrung 24 vorgesehen, die einen etwas geringeren Durchmesser hat, da durch diese lediglich ein Werkzeug, beispielsweise ein Innensechskantschlüssel eingeführt werden muß. Wie beim Betrachten der Fig. 8 bis 10 deutlich wird, liegen diese Bohrungen in einer Ebene.

Bei den verschiedenen Ausgestaltungen nach Fig. 8, 9 und 10 nehmen die Bohrungen in dieser Ebene lediglich einen unterschiedlichen Winkel zueinander ein. Bei der Hohlkugel 11 nach Fig. 8 weisen die vier Bohrungen einen Winkel von 90° untereinander auf. Bei der Ausführungsform nach Fig. 9 der Hohlkugel 12 beträgt der Winkel zwischen den Befestigungsbohrungen 21 und 22 120°. Bei der Ausführungsform der Hohlkugel 13 nach Fig. 10 beträgt der Winkel zwischen den Befestigungsbohrungen 21 und 22 135°.

Es können in einer Hohlkugel auch mehr als zwei Befestigungsbohrungen vorgesehen sein. Diese liegen dann in einer anderen Ebene.

Beim Betrachten der Fig. 8 bis 10 wird deutlich, daß jeweils eine Befestigungsbohrung 21 oder 22 mit einem Gewinde versehen ist. Dieses Gewinde entspricht dem Gewinde der zugehörigen Befestigungsschraube 20. Die Befestigungsschraube 20 weist zwischen ihrem Gewinde und dem Kopf eine Freidrehung 25 (Fig. 4 und 5) auf. Hierdurch ist es möglich, bereits im voraus eine Befestigungsschraube "lose" in der Hohlkugel anzuordnen, da sie in das Gewinde der Befestigungsbohrung 22 eingeschraubt werden kann, nachdem sie durch die Durchstecköffnung 23 eingeführt wurde. Sie ist aufgrund der Freidrehung 25 aber beschränkt beweglich, damit eine entsprechende Anpassung beim Montieren gewährleistet ist.

Bei Herstellung einer Verbindung, beispielsweise zweier Aufnahmerohre 1, wie in Fig. 5 dargestellt, werden zuerst vier Aufnahmekugeln 11 mit Hilfe von Befestigungsschrauben, die in der jeweiligen Befestigungsbohrung 22 vormontiert sind, mit dem einen Aufnahmerohr verbunden. Dann werden die anderen Befestigungsschrauben in den Kugelinnenraum eingeführt und die Kugeln werden mit den entsprechend positionierten Schrauben in die erforderliche Position gedreht. Dann erfolgt die Verbindung mit dem zweiten Aufnahmerohr. Anschließend werden die Schrauben festgezogen. Die Positionierung erfolgt ausschließlich über die Anlage der Kugeln an den Kugelkalotten. Eine besondere Justierung ist nicht erforderlich.

Entsprechend wird die Verbindung zwischen zwei senkrecht zueinander verlaufenden Aufnahmerohren 1, so wie sie in Fig. 6 dargestellt ist, hergestellt, lediglich mit Hilfe von Aufnahmekugeln 12, wie sie in Fig. 9 dargestellt sind. Der Winkel zwischen den Befestigungsbohrungen 21 und 22 ist hier größer, da die geometrischen Bedingungen aufgrund des senkrechten Verlaufs der Aufnahmerohre anders sind.

Entsprechendes gilt für die Verbindung einer Grundplatte 17 mit einem Aufnahmerohr 1 nach Fig. 7. Hier ist der Winkel zwischen den Befestigungsbohrungen bei der Hohlkugel 13 nach Fig. 10 noch größer.

Mit Hilfe von normalerweise vier Hohlkugeln läßt sich eine genaue und reproduzierbare Verbindung zwischen zwei Vorrichtungsbauteilen herstellen. Diese Vorrichtungsbauteile nehmen zwangsläufig die gewünschte und richtige Position zueinander ein. Eine besondere Justierung bei Herstellung der Verbindung ist nicht erforderlich.

## Patentansprüche

1. Aufnahmerohr zum Aufbau von Vorrichtungen zum Aufspannen von Werkstücken in definierter und reproduzierbarer Lage, mit in regelmäßigen Koordinatenabständen ausgebildeten Rasterpunkten, dadurch gekennzeichnet, daß in Rohrlängsrichtung am Umfang gleichmäßig verteilte Fasen (3) vorgesehen sind, auf denen die Rasterpunkte in Form von konkaven Kugelkalotten (2) ausgebildet sind, deren Mittelpunkte (5) auf parallel zu den Fasen (3) außerhalb des Rohrkörpers verlaufenden Linien liegen, die die ideale Rohrform beschreiben.

2. Aufnahmerohr nach Anspruch 1, gekennzeichnet durch die Form eines Quaders mit einem rechteckigen oder quadratischen Querschnitt, wobei die Fasen (3) durch Abschrägung der Kanten gebildet sind und die Linien (4), auf denen die Mittelpunkte der konkaven Kugelkalotten (2) liegen, die Schnittlinien der bei der entsprechenden idealen Form aneinander angrenzenden Flächen des Quaders sind.

3. Aufnahmerohr nach Anspruch 2, dadurch gekennzeichnet, daß die Innenkontur des Quaders der Außenkontur mit den Fasen (3) derart folgt, daß innen parallel zu den Fasen (3) Schrägflächen (6) vorgesehen sind.

4. Grundplatte zum Aufbau von Vorrichtungen zum Aufspannen von Werkstücken in definierter und reproduzierter Lage, mit in regelmäßigen Koordinatenabständen ausgebildeten Rasterpunkten, dadurch gekennzeichnet, daß die Rasterpunkte in Form von konkaven Kugelkalotten (18) gebildet sind, deren Mittelpunkte (19) auf sich im Rastermaß senkrecht kreuzenden Linien liegen, die die ideale Plattenform beschreiben.

5. Adapterplatte zur Verbindung mit einem Aufnahmerohr nach Ansprüchen 1 bis 3 oder einer Grundplatte nach Anspruch 4, dadurch gekennzeichnet, daß an zwei gegenüberliegenden Seitenflächen Fasen (3) mit konkaven Kugelkalotten (2) nach Anspruch 1 oder 2 vorgesehen sind.

6. Verbindungselement zur Verbindung von Aufnahmerohren nach Ansprüchen 1 bis 3 untereinander oder mit einer Grundplatte nach Anspruch 4 und/oder einer Adapterplatte nach Anspruch 5, gekennzeichnet durch die Ausbildung als Hohlkugel (11, 12, 13), deren Außendurchmesser gleich dem Durchmesser der konkaven Kugelkalotten (2, 18) ist, und durch
eine große Durchsteckbohrung (23), deren Durchmesser größer ist als der Durchmesser des Kopfes der zugehörigen Befestigungsschraube (20),
eine ungefähr gegenüberliegende erste Befestigungsbohrung (21), eine im Winkel von mindestes 90° zu der ersten Befestigungsbohrung (21) in der Ebene der Durchsteckbohrung (23) und der ersten Befestigungsbohrung (21) liegende zweite Befestigungsbohrung (22) und
eine ebenfalls in dieser Ebene ungefähr gegenüber der ersten Befestigungsbohrung (22) liegende kleine Werkzeugbohrung (24).

7. Verbindungselement nach Anspruch 6, dadurch gekennzeichnet, daß zusätzlich zu der ersten und der zweiten Befestigungsbohrung (21, 22) mindestens eine weitere Befestigungsbohrung vorgesehen ist, die in einer Ebene im wesentlichen senkrecht zu der Ebene der anderen Befestigungsbohrungen (21, 22, 23, 24) liegt.

8. Verbindungselement nach Anspruch 6 oder 7, dadurch gekennzeichnet, daß eine der Befestigungsbohrungen (22) ein Gewinde aufweist, das demjenigen der zugehörigen Befestigungsschraube (20) entspricht.

9. System zum Aufbau von Vorrichtungen zum Aufspannen von Werkstücken in definierter und reproduzierbarer Lage, gekennzeichnet durch die Verwendung von Aufnahmerohren (1) nach Ansprüchen 1, 2 oder 3, einer Grundplatte (17) nach Anspruch 4 und/oder einer Adapterplatte (14) nach Anspruch 5 sowie Verbindungselementen (11, 12, 13) nach Ansprüchen 6 bis 9.
